(19) Europäisches Patentamt
European Patent Office
Office européen des brevets

(11) **EP 3 014 823 B1**

(12) **FASCICULE DE BREVET EUROPEEN**

(45) Date de publication et mention
de la délivrance du brevet:
**22.04.2020 Bulletin 2020/17**

(21) Numéro de dépôt: **14749898.4**

(22) Date de dépôt: **26.06.2014**

(51) Int Cl.:
**H04L 12/733** (2013.01)    **H04L 12/705** (2013.01)

(86) Numéro de dépôt international:
**PCT/FR2014/051637**

(87) Numéro de publication internationale:
**WO 2014/207398 (31.12.2014 Gazette 2014/53)**

(54) **PROCÉDÉ DE ROUTAGE RÉDUISANT LES CONSÉQUENCES DES MICRO-BOUCLES**

ROUTING-VERFAHREN ZUR MINDERUNG DER FOLGEN VON MICROLOOPS

ROUTING METHOD REDUCING THE CONSEQUENCES OF MICROLOOPS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2013 FR 1356144**

(43) Date de publication de la demande:
**04.05.2016 Bulletin 2016/18**

(73) Titulaire: **Transpacific IP Group Limited
Grand Cayman KY1-1001 (KY)**

(72) Inventeurs:
• **DECRAENE, Bruno**
  **F-92170 Vanves (FR)**
• **LITKOWSKI, Stéphane**
  **F-35340 Liffre (FR)**

(74) Mandataire: **Eidelsberg, Olivier Nathan et al
Cabinet Flechner
22, avenue de Friedland
75008 Paris (FR)**

(56) Documents cités:
**US-B1- 6 501 756**

• **AGARWAL BROCADE B AKYOL CISCO
SYSTEMS P: "Time To Live (TTL) Processing in
Multi-Protocol Label Switching (MPLS)
Networks; rfc3443.txt", 20030101, 1 janvier 2003
(2003-01-01), XP015009226, ISSN: 0000-0003**

• **DEFENSE ADVANCED RESEARCH PROJECTS
AGENCY INFORMATION SCIENCES INSTITUTE
UNIVERSITY OF SOUTHERN CALIFORNIA 4676
ADMIRALTY WAY MARI: "INTERNET PROTOCOL
DARPA INTERNET PROGRAM PROTOCOL
SPECIFICATION ; rfc791.txt", 19810901, 1
septembre 1981 (1981-09-01), XP015006773,
ISSN: 0000-0003**

• **SHAND S BRYANT CISCO SYSTEMS M: "A
Framework for Loop-Free Convergence;
rfc5715.txt", A FRAMEWORK FOR LOOP-FREE
CONVERGENCE; RFC5715.TXT, INTERNET
ENGINEERING TASK FORCE, IETF; STANDARD,
INTERNET SOCIETY (ISOC) 4, RUE DES
FALAISES CH-1205 GENEVA, SWITZERLAND, 15
janvier 2010 (2010-01-15), pages 1-22,
XP015068152,**

• **SHAND S BRYANT CISCO SYSTEMS M: "IP Fast
Reroute Framework; rfc5714.txt", IP FAST
REROUTE FRAMEWORK; RFC5714.TXT,
INTERNET ENGINEERING TASK FORCE, IETF;
STANDARD, INTERNET SOCIETY (ISOC) 4, RUE
DES FALAISES CH- 1205 GENEVA,
SWITZERLAND, 15 janvier 2010 (2010-01-15),
pages 1-15, XP015068151,**

• SHAND INDIVIDUAL CONTRIBUTOR S BRYANT S PREVIDI C FILSFILS CISCO SYSTEMS P FRANCOIS INSTITUTE IMDEA NETWORKS O BONAVENTURE M: "Framework for Loop-free convergence using oFIB; draft-ietf-rtgwg-ordered-fib-12.txt", FRAMEWORK FOR LOOP-FREE CONVERGENCE USING OFIB; DRAFT-IETF-RTGWG-ORDERED-FIB-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 mai 2013 (2013-05-24), pages 1-27, XP015090883,

**Description**

**1. Domaine de l'invention**

La demande d'invention se situe dans le domaine des télécommunications, et plus particulièrement des réseaux de paquets IP (Internet Protocol, ou protocole Internet) et MPLS (Multi-Protocol Label Switching, ou commutation d'étiquette multi-protocole).

**2. Etat de la technique antérieure**

L'invention se situe dans le contexte des réseaux IP et MPLS constitués de routeurs acheminant des paquets IP ou MPLS et routant ces paquets de saut en saut, le long d'un chemin jusqu'à leurs destinations.

Lors d'une modification de l'état du reseau, chaque routeur modifie ses tables de commutation (FIB, pour forwarding information base, ou base d'informations de transfert) de manière non chronologiquement ordonnée. De ce fait, durant les opérations de re-routage qui font suite à une panne de lien ou de routeur, à un rétablissement de lien ou de routeur, ou à un changement de métrique utilisée par les routeurs pour le calcul des routes, tous les routeurs ne mettent pas en place les nouvelles routes dans leur table de commutation exactement au même instant. Par conséquent des boucles de commutation temporaires, ou "micro-boucles", peuvent se produire entre un routeur utilisant une ancienne route et un routeur voisin utilisant la nouvelle route.

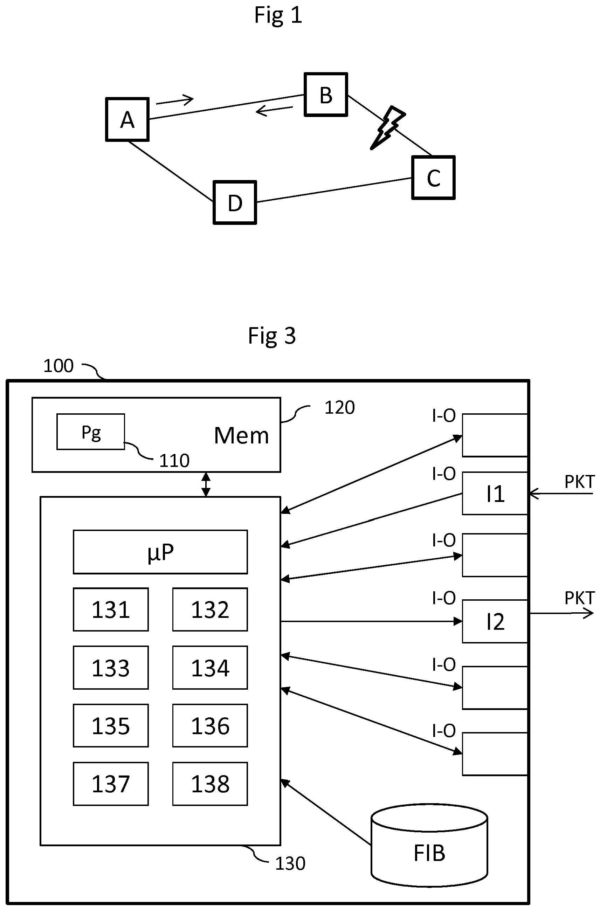

Ce phénomène de micro-boucle est illustré par la **figure 1,** où le routeur A émet vers B un paquet dont la destination finale est le routeur C. Le routeur B détectant une panne du lien entre lui-même et le routeur C, il met à jour sa table de routage et décide de rerouter le paquet par une nouvelle route passant par le routeur A, afin que le paquet puisse atteindre le routeur C malgré la panne. Mais tant que le routeur A n'a pas mis à jour sa table de routage pour joindre la destination C, le routeur A fera faire demi-tour au paquet renvoyé par le routeur B. Le paquet enchaine donc les demi-tours entre les routeurs A et B, tant que les tables de routages des deux routeurs ne sont pas mises à jour, créant la micro-boucle. Il est à noter que selon les topologies, les micro-boucles peuvent mettre jeu un nombre de routeurs supérieur à 2, par exemple un triangle formé des routeurs A, B, D, ou un carré formé des routeurs A, B, C, D.

Afin d'empêcher ces paquets de circuler indéfiniment dans le réseau en utilisant ses ressources (bande passante), il est connu d'affecter à un paquet une durée de vie limitée indiquée dans un champ du paquet et fixée initialement à une valeur entière maximale prédéterminée. Cette valeur telle que definie dans la RFC 791 correspond en théorie au temps de vie maximum du paquet dans le réseau, mesuré en secondes. Cependant, pour des raisons d'implémentation, cette valeur correspond dans les faits à un nombre de sauts ou de traversées de routeur.

Par exemple en IPv6 ce champ de longévité est appelé Hop Limit (limite de sauts) et en IPv4 ou en MPLS, il est appelé TTL (Time To Live, ou temps de vie).

A chaque saut, le champ de longevité est decrementé de 1. Une fois la valeur 0 atteinte, le paquet est détruit.

Une telle méthode est décrite dans la publication US 6,501,756.

La méthode actuelle permet effectivement d'éliminer une micro-boucle, mais un premier inconvénient est qu'elle est très lente, ce qui entraîne une saturation des interfaces pendant un intervalle de temps substantiel, c'est à dire de l'ordre de 200ms à 4s dans un réseau raisonnablement performant. Ces durées étaient acceptables lors de la création de l'Internet mais ne le sont plus de nos jours, de par les performances attendues des réseaux actuels.

Un deuxième inconvénient de cette méthode est qu'elle traite tous les paquets de la même façon, indépendamment de leur importance ou de leur probabilité d'être dans une micro-boucle. En particulier, lors de la décrémentation, elle ne fait aucune distinction lorsqu'un paquet fait demi-tour, alors que c'est un comportement suspicieux qui ne devrait pas se produire si le routage était cohérent. Ainsi, les micro-boucles, qui sont typiquement des successions de demi-tours, ne sont que faiblement pénalisées. Par exemple, un terminal tel qu'un PC sous Windows XP envoie des paquets IP avec un TTL égal à 128 ("Default TTL", ou TTL par défaut). Après la traversée de 8 routeurs, c'est-à-dire l'équivalent de la traversée d'un pays comme la France, le paquet peut boucler 60 fois entre deux routeurs, avec un effet multiplicatif identique (par 60) sur le débit du trafic émis dans la boucle entre ces deux routeurs, ce qui a pour effet typique de saturer l'interface.

Le document Internet-Draft de l'IETF "draft-ietf-rtgwg-ordered-fib-12" publié le 25 mai 2013 divulgue une solution au problème des micro-boucles qui consiste à ordonner séquentiellement les mises à jour de table de routage que chacun des routeurs affectés par les opérations de re-routage doivent effectuer, de façon à éviter l'apparition de microboucles. Un inconvénient de cette solution est qu'elle nécessite une intelligence centralisée et de nouvelles fonctions de gestion au niveau du plan de contrôle du réseau. De plus, elle n'est pas capable de supprimer les micro-boucles dans tous les cas, en particulier lors de la succession de plusieurs pannes.

Un des buts de l'invention est de remédier à ces inconvénients de l'état de la technique.

## 3. **Exposé de l'invention**

L'invention vient améliorer la situation à l'aide d'un procédé de routage d'un paquet dans un réseau de commutation de paquets en mode de routage non connecté, mis en oeuvre par un routeur, suivant la revendication 1.

Dans un réseau de commutation de paquets en mode de routage non connecté, chaque routeur recevant un paquet doit décider quel sera le prochain routeur vers lequel le paquet doit être envoyé. A chaque traversée de routeur, le champ de longévité du paquet est décrémenté. Ce champ peut représenter une quantité de temps restant au paquet avant d'être détruit, mais en pratique il représente plutôt un nombre de traversées de routeurs, ou de sauts entre routeurs, restant à effectuer avant que le paquet soit détruit ou stoppé. Contrairement à la technique antérieure où le pas de décrémentation est constant et égal à un, le procédé de routage selon l'invention permet d'adapter le pas en fonction des conditions de routage.

Si des conditions de routage ne sont pas favorables, la valeur du pas peut être augmentée, ce qui raccourcit d'autant plus vite la longévité du paquet et donc la durée pendant laquelle il occupe les ressources du réseau de façon inefficace. On adapte dynamiquement la valeur du pas aux conditions de routage.

Selon un aspect de l'invention, l'information obtenue comprend une interface d'entrée du routeur pour le paquet et une interface de sortie du routeur pour le paquet, et, lorsque l'interface de sortie est identique à l'interface d'entrée, situation appelée un demi-tour, la valeur du pas est majorée.

Au sens de la demande, il faut entendre par une interface une ou plusieurs interfaces connectées au même routeur voisin. En effet, certains routeurs peuvent avoir plusieurs interfaces parallèles connectées à un même routeur.

En reprenant la figure 1 en guise d'illustration, lorsqu'un paquet émis par le routeur A est reçu par le routeur B, et que le routeur B, calculant à l'aide de sa table de routage la route que le paquet reçu doit emprunter, détermine pour le paquet une interface de sortie identique à l'interface d'entrée, cela signifie que le paquet fait un demi-tour pour retourner vers le routeur A. Il est donc vraisemblable dans ce cas que le paquet fera un autre demi-tour pour revenir au routeur B lors de sa deuxième traversée du routeur A, puisque la table de routage du routeur A a déjà envoyé le paquet vers le routeur B, et n'a probablement pas eu le temps d'être modifiée entretemps. Tant que les tables de routage du routeur A et du routeur B ne sont pas mises à jour de façon cohérente, l'aiguillage du paquet n'est pas modifiée, et celui-ci effectue des demi-tours entre les deux routeurs formant alors ce qui est appelé une micro-boucle.

Grâce à cet aspect de l'invention, en cas de demi-tour, symptomatique d'une micro-boucle, la valeur du champ de longévité est diminuée plus fortement afin de limiter le nombre de demi-tours. Si le paquet est effectivement pris dans une micro-boucle, il sera plus rapidement détruit. Si le paquet n'est pas pris dans une micro-boucle et que le demi-tour est isolé, le paquet n'est pénalisé qu'une seule fois avant de poursuivre son chemin vers sa destination.

Selon un aspect de l'invention, la valeur majorée du pas est déterminée comme étant au moins égale à la valeur maximale du champ de longévité, divisée par un nombre prédéterminé de demi-tours autorisés à un même paquet.

Grâce à cet aspect de l'invention, en cas de demi-tour, symptomatique d'une micro-boucle, la valeur du champ de longévité est diminuée d'un pas de décrémentation suffisamment élevé pour limiter le nombre de demi-tours à un nombre acceptable, quelle que soit la valeur maximale que peut prendre le champ de longévité dans le réseau.

Selon un aspect de l'invention, l'information obtenue comprend un coût associé à une interface de sortie du routeur, et la valeur du pas est déterminée comme étant proportionnelle au coût.

Ainsi l'utilisation de liens coûteux par le routeur est pénalisée plus fortement.

Selon un aspect de l'invention, le coût associé à l'interface de sortie est fonction d'au moins un paramètre compris dans le groupe comprenant :

- délai d'un lien associé à l'interface de sortie ;
- bande passante du lien ;
- gigue du lien ;
- perte de paquets du lien ;
- taille maximale d'un paquet permise sur le lien ;
- une valeur configurée par l'opérateur du réseau.

Moins un lien est performant, plus son utilisation par des paquets peut devenir problématique. Le délai du lien, par exemple, est un paramètre lié au lien qui est particulièrement intéressant car plus le délai est court, plus le trafic grossit rapidement en cas de micro-boucle, et donc a plus de chance de saturer l'interface avant qu'un processus de re-routage n'élimine la micro-boucle.

Avantageusement, lors de l'étape d'obtention du procédé de routage, le routeur peut obtenir plusieurs informations, puis les combiner lors de l'étape de détermination de la valeur du pas de décrémentation. Par exemple, si un demi-tour est détecté et si le délai du lien associé à l'interface de sortie est très faible, la valeur du pas sera non seulement calculée de sorte qu'un nombre maximal de demi-tours ne soit pas dépassé, mais sera de plus majorée. Cela aura pour effet de réduire encore plus le nombre de demi-tours autorisés au paquet lorsque ces demi-tours sont particulièrement dommageables pour le lien.

Selon un aspect de l'invention, la valeur du pas déterminée est majorée si le lien associé à l'interface de sortie est un tunnel dont la destination n'est pas un routeur directement voisin du routeur.

Ainsi, la valeur du pas de décrémentation est augmentée pour les destinations pour lesquelles une règle dite "FRR" (FastReRoute, ou reroutage rapide) est activée. Lorsqu'une règle FRR est active, cela signifie que le routeur a détecté une défaillance sur un lien vers un routeur voisin et qu'il a décidé de rerouter le trafic sans avertir d'autres routeurs de l'existence de la défaillance. En général, le routeur applique un FRR vers un routeur qui d'une part n'est pas un voisin direct, à l'aide d'un tunnel par exemple, et d'autre part dont il sait qu'il ne lui renverra pas le trafic. En effet, une boucle peut quand même se former entre trois routeurs ou plus, en cas de défaillance plus importante qu'anticipée par le routeur, impliquant par exemple plus d'un lien.

Un certain nombre de ce type de boucles peut toutefois être autorisé de la même façon que pour les micro-boucles.

Selon un aspect de l'invention, l'information obtenue comprend une première distance entre un routeur précédent et un routeur de destination finale du paquet, et une deuxième distance entre le routeur et ledit routeur de destination finale, et la valeur du pas déterminée est majorée si la première distance est inférieure à la deuxième distance.

Ainsi l'utilisation d'une route non optimale qui fait s'éloigner le paquet de son routeur de destination, est pénalisée plus fortement.

Cette option est pertinente dans le cas de réseaux VPN MPLS (Virtual Private Network, ou réseau privé virtuel) utilisant des tunnels vers des destinations routées par un protocole de routage tel qu'IGP (Interior Gateway Protocol, ou protocole de passerelle intérieure), qui annonce la destination et qui permettent donc de calculer localement ces deux distances.

Selon un aspect de l'invention, l'information obtenue est une classe de service comprise dans au moins un champ du paquet.

Ainsi la priorité du paquet, qui est fonction de sa classe de service, est utilisée pour déterminer la valeur du pas de décrémentation. Cette classe de service du paquet est typiquement indiquée dans le paquet dans un champ de type DiffServ, EXP, Traffic Class, IP Precedence, TOS ou équivalent. Par exemple, un paquet dont la classe de service est du type "best effort" (c'est à dire pour un service Internet indifférencié) aura un pas de décrémentation supérieur à celui d'un paquet dont la classe est plus importante.

Inversement, pour certaines classes de trafic à haute priorité, on pourrait choisir d'augmenter le pas de décrémentation très fortement. Par exemple, pour les classes de trafic très sensible à la jige, comme les services temps réel tels que la voix, la vidéo, ou des protocoles de synchronisation d'horloges, pour lesquels une perte de paquet est préférable à un allongement du délai, délai qui serait dû par exemple à une micro-boucle.

Selon un aspect de l'invention, l'information obtenue est un type de protocole utilisé par une des couches du paquet.

Ainsi, les trafics ayant le moins de valeur pour le client ou pour l'opérateur seraient pénalisés en premier. Par exemple, si le protocole de la couche applicative du paquet est un protocole de type "peer-to-peer", la valeur du pas de décrémentation sera supérieur à celle du pas si ce protocole est "http".

Selon un aspect de l'invention, l'information obtenue est le champ de longévité du paquet reçu, et la valeur du pas est déterminée en fonction de la valeur du champ.

Ainsi, la valeur du pas de décrémentation dépend de la valeur du champ de longévité reçu. Par exemple en prenant un pas égal à la moitié de la valeur de ce champ de longévité, cela permet une décroissance plus rapide du champ de longévité que la technique antérieure, où le pas de décrémentation n'est que d'une unité. Une décroissance plus rapide est utile, par exemple, lorsque le réseau traversé n'est pas de grande taille, et que la valeur initiale attribuée au champ de longévité est grande.

Les différents aspects du procédé de routage qui viennent d'être décrits peuvent être mis en oeuvre indépendamment les uns des autres ou en combinaison les un avec les autres.

L'invention concerne aussi un dispositif de routage d'un paquet dans un réseau de commutation de paquets en mode de routage non connecté, mis en oeuvre par un routeur comprenant les modules suivants :

- réception du paquet ;
- lecture d'un champ, dit champ de longévité du paquet, destiné à être décrémenté lors d'une traversée d'un routeur ;
- décrémentation de la valeur du champ de longévité à l'aide d'un pas de valeur prédéterminée, dit pas de décrémentation ;
- décision de routage du paquet en fonction de la valeur du champ de longévité décrémenté, le paquet étant détruit lorsque ladite valeur est inférieure ou égale à zéro ; le dispositif comprenant en outre les modules suivants :
- obtention d'au moins une information parmi un groupe d'informations comprenant une information relative à des conditions de routage du paquet et une information relative à des paramètres du paquet ;
- détermination de la valeur du pas de décrémentation en fonction d'au moins l'information obtenue.

Un tel dispositif met en oeuvre les étapes du procédé de routage tel que décrit précédemment.

L'invention concerne aussi un routeur apte à acheminer des paquets dans un réseau de communication en mode non connecté, comprenant un dispositif de routage tel que celui qui vient d'être décrit.

L'invention concerne aussi un programme d'ordinateur comprenant des instructions pour la mise en oeuvre des étapes du procédé de routage qui vient d'être décrit, lorsque ce procédé est exécuté par un processeur.

L'invention concerne enfin un support d'enregistrement lisible par un équipement de gestion sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

## 4. Présentation des figures

D'autre avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :

- la figure 1 présente de façon schématique le phénomène d'une micro-boucle entre deux routeurs,
- la figure 2 présente un exemple de mise en oeuvre du procédé de routage selon un mode de réalisation général de l'invention,
- la figure 3 présente un exemple de structure d'un dispositif de routage, selon un aspect de l'invention.

## 5. Description détaillée d'au moins un mode de réalisation de l'invention

Dans la suite de la description, on présente des exemples de plusieurs modes de réalisation de l'invention se basant sur MPLS, mais l'invention s'applique également à d'autres réseaux à commutation de paquets tels qu'IPv4 ou IPv6.

La **figure 1** a déjà fait l'objet d'explications et ne sera pas développée davantage. Dans la suite, sauf précision, le lecteur se place du point de vue du routeur B.

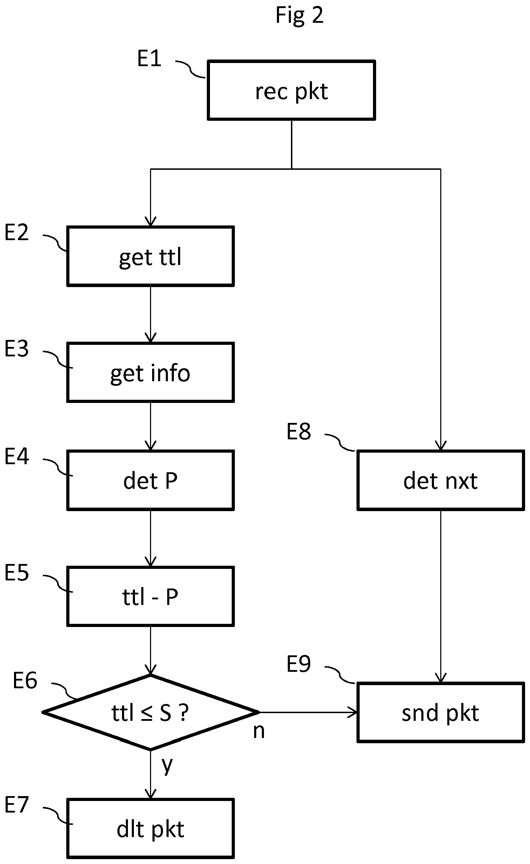

La **figure 2** présente un exemple de mise en oeuvre du procédé de routage selon un mode de réalisation général de l'invention.

Lors d'une étape E1 connue, le routeur reçoit un paquet sur une interface I1.

Lors d'une étape E2 connue, le routeur lit le champ TTL du paquet reçu.

Lors d'une étape E3, le routeur obtient au moins une information relative aux conditions de routage appllicables au paquet, et/ou relative à un paramètre compris dans le paquet.

L'ordre séquentiel entre les étapes E2 et E3 peut être inversé.

Lors d'une étape E4, le routeur détermine, en fonction au moins de la ou des informations obtenues, la valeur d'un pas de décrémentation P à appliquer au champ TTL.

Lors d'une étape E5, le routeur décrémente le champ TTL du paquet en soustrayant P de la valeur du champ TTL.

Lors d'une étape de décision E6, la nouvelle valeur du champ TTL est comparée à un seuil S, qui peut être fixé à zéro.

Si le champ TTL est inférieur ou égal à S, le paquet est détruit lors d'une étape E7, et n'est donc pas routé vers sa destination finale.

Suite à l'étape E1 de réception du paquet, et avant l'étape E4 de détermination du pas, le routeur détermine également, lors d'une étape E8 connue qui peut être avant ou après l'étape E3, depuis quelle interface de sortie, c'est à dire vers quel prochain routeur le paquet doit être émis, à l'aide d'une table de routage et en fonction de la destination finale du paquet.

Si lors de l'étape de décision E6, le champ TTL est supérieur au seuil, le paquet est routé, lors d'une étape E9 connue, vers le prochain routeur déterminé lors de l'étape E8.

Dans un **premier mode de réalisation** particulier de l'invention, le pas de décrémentation P est déterminé en fonction de l'occurence d'un demi-tour effectué par le paquet.

L'étape E1 est suivie d'une étape d'enregistrement E11 de l'interface d'entrée I1 du paquet.

L'étape E3 du mode général est remplacée par une étape E31 d'obtention de l'interface de sortie I2 et de l'interface d'entrée I1. L'obtention de l'interface de sortie se fait à l'aide de l'étape E8. L'obtention de l'interface d'entrée se fait à l'aide de l'étape E11.

L'étape E4 du mode général est remplacée par une étape E41 de détermination de la valeur du pas de décrémentation, comprenant une étape E412 de détection d'un demi-tour. Si les interfaces I1 et I2 sont identiques, c'est à dire si elles connectent le routeur à un même routeur voisin, cela indique l'occurence d'un demi-tour. Dans ce cas le pas de décrémentation P est majoré et peut par exemple être calculé de la façon suivante:

$$P = INT (TTLmax / DMmax)$$

- où TTLmax représente la valeur maximale que peut prendre le champ TTL du paquet,
- et DMmax représente le nombre maximum de demi-tours qu'il est souhaité d'autoriser pour ce paquet.

Lors d'une étape identique à l'étape E5 du mode général, le champ TTL est diminué de P. Si le résultat est supérieur au seuil, le paquet est routé vers le prochain routeur, qui est le même que le routeur précédent.

Le routeur précédent, recevant le même paquet qu'il vient d'émettre, et appliquant le même procédé, diminuera également le champ TTL de la même valeur de P, avant de réémettre à nouveau vers le même routeur d'origine le même paquet.

Ainsi, si au départ le paquet est reçu avec une valeur du champ TTL égale à TTLmax, on comprend que le paquet effectuera au plus DMmax allers simples entre les deux routeurs, c'est à dire (DMmax-1) demi-tours, avant que la valeur du champ TTL ne franchisse le seuil au-delà duquel le paquet est détruit.

Selon la technique antérieure, le nombre de demi-tours peut être très élevé, formant ce qui est appelé une micro-boucle, et peut consommer toute la bande passante entre les deux routeurs pendant toute la durée de la micro-boucle, car le champ de longévité n'est décrémenté que d'une unité à chaque passage dans un routeur.

En effet, par exemple dans un contexte où la valeur de TTLmax est de 255 (valeur initiale utilisée pour un paquet expédié par un équipement terminal sous système Unix, par ailleurs égale à la valeur maximale de ce champ long de 8 bits), la technique antérieure autorise jusqu'à 254 demi-tours entre deux routeurs avant la destruction du paquet. Grâce à l'invention, si la valeur de DMmax est de 3, le pas de décrémentation est fixé à 255 / 3 c'est à dire 85, afin de garantir la destruction du paquet, et la fin de la micro-boucle, au bout de 3 demi-tours. Ainsi, les effets négatifs des micro-boucles sur la bande passante sont éliminés, mais sans que soient complètement interdits un petit nombre de demi-tours, qui peuvent être justifiés et nécessaires dans certains cas.

Dans un **deuxième mode de réalisation** particulier de l'invention, le pas de décrémentation P est déterminé en fonction d'un coût d'un lien vers le prochain routeur.

L'étape E3 du mode général est remplacée par une étape E32 d'obtention de l'interface de sortie I2 et d'un coût C associé à cette interface.

L'étape E4 du mode général est remplacée par une étape E42 de détermination de la valeur du pas de décrémentation P, où P est calculé par exemple de la façon suivante:

$$P = INT( Pmin + ((Pmax-Pmin) / (Cmax-Cmin)) * (C-Cmin))$$

- où Pmax et Pmin représentent respectivement les valeurs maximale et minimale que peuvent prendre la valeur du pas P,
- Cmax et Cmin représentent respectivement les valeurs maximale et minimale que peuvent prendre le coût associé à une interface du routeur
- et C représente le coût associé à l'interface I2.

Dans cet exemple, P est linéairement proportionnel à C, mais toute autre relation, linéaire ou non, est possible entre P et C.

Ainsi, plus le lien emprunté par le paquet présente un coût élevé, plus la valeur de P est proche de Pmax, plus le paquet est pénalisé, et moins il lui est donné de temps pour occuper des ressources coûteuses du réseau avant d'arriver à destination ou d'être détruit.

Le coût associé à l'interface de sortie I2 peut être prédéterminé, ou calculé en fonction d'un délai d'un lien associé à l'interface de sortie, de sa bande passante, ou de tout autre métrique de performance du lien, ou d'une combinaison de ces critères.

Dans un **troisième mode de réalisation** particulier de l'invention, le pas de décrémentation P est déterminé en fonction de l'utilisation ou non d'un tunnel vers le prochain routeur.

L'étape E3 du mode général est remplacée par une étape E33 d'obtention de l'interface de sortie I2 et du type de lien associé à cet interface.

Si le type de lien indique que c'est un tunnel, c'est à dire que le paquet doit être encapsulé dans un autre paquet qui est destiné à être émis vers une destination spécifique du réseau, l'étape E4 du mode général est remplacée par une étape E43 de détermination de la valeur du pas de décrémentation P, ou P est majoré d'une quantité prédéterminée.

Ainsi, plus le paquet emprunte de tunnels, plus la valeur du champ TTL décroit vite, plus le paquet est pénalisé, et moins il lui est donné de temps pour occuper des ressources coûteuses du réseau telles que des tunnels avant d'arriver à destination ou d'être détruit.

Dans un **quatrième mode de réalisation** particulier de l'invention, le pas de décrémentation P est déterminé en fonction de l'éloignement ou du rapprochement du paquet de sa destination finale.

L'étape E3 du mode général est remplacée par une étape E34 d'obtention d'une première distance d1 entre le précédent routeur et la destination finale du paquet, et d'une deuxième distance d2 entre le routeur et la destination finale du paquet.

Si d1 est inférieur à d2, c'est à dire si le paquet, en passant par le routeur, s'éloigne de sa destination finale, l'étape E4 du mode général est remplacée par une étape E44 de détermination de la valeur du pas de décrémentation P, ou P est majoré d'une quantité prédéterminée.

Ainsi, plus le paquet s'éloigne de sa destination finale, ce qui est un comportement suspicieux, plus la valeur du champ TTL décroit vite, plus le paquet est pénalisé, et moins il lui est donné de temps pour occuper des ressources du réseau inefficacement avant d'arriver à destination ou d'être détruit.

Dans un **cinquième mode de réalisation** particulier de l'invention, le pas de décrémentation P est déterminé en fonction de la classe de service du paquet.

L'étape E3 du mode général est remplacée par une étape E35 d'obtention de la valeur du champ "classe de service" du paquet.

L'étape E4 du mode général est remplacée par une étape E45 de détermination de la valeur du pas de décrémentation P, où P est fonction de la priorité de la classe de service obtenue.

Ainsi, moins le paquet est prioritaire, plus la valeur du champ TTL décroit vite, plus le paquet est pénalisé, et moins il lui est donné de temps pour occuper des ressources du réseau au détriment de paquets plus prioritaires, avant d'arriver à destination ou d'être détruit.

Dans un **sixième mode de réalisation** particulier de l'invention, le pas de décrémentation P est déterminé en fonction d'au moins un des protocoles de communication utilisés par le paquet.

L'étape E3 du mode général est remplacée par une étape E36 d'obtention du type de protocole utilisé par une des couches OSI pour le paquet, ou plusieurs des types de protocole utilisés par plusieurs des couches.

L'étape E4 du mode général est remplacée par une étape E46 de détermination de la valeur du pas de décrémentation P, ou P est fonction de la préférence accordée par l'opérateur du réseau au trafic utilisant le protocole ou la combinaison de protocoles obtenus.

Ainsi, moins le flux dont fait partie le paquet a de la valeur, plus la valeur du champ TTL décroit vite, plus le paquet est pénalisé, et moins il lui est donné de temps pour occuper des ressources du réseau au détriment de paquets faisant partie de flux de plus de valeur, avant d'arriver à destination ou d'être détruit.

Dans un **septième mode de réalisation** particulier de l'invention, le pas de décrémentation P est déterminé en fonction de la valeur du champ TTL du paquet reçu.

L'étape E3 du mode général est supprimée.

L'étape E4 du mode général est remplacée par une étape E46 de détermination de la valeur du pas de décrémentation P, ou P est proportionnel à la valeur du champ TTL du paquet.

Ainsi, plus la valeur du champ TTL est grande, plus elle décroit vite, plus le paquet est pénalisé, et moins il lui est donné de temps pour occuper des ressources du réseau, avant d'arriver à destination ou d'être détruit.

Les modes de réalisation particuliers qui viennent d'être décrits peuvent être combinés les uns avec les autres. En particulier, on a vu qu'il était intéressant de combiner le premier avec le deuxième mode de réalisation, afin de pénaliser le paquet si un demi-tour est détecté, et de le pénaliser encore plus fortement si le demi-tour est effectué sur un lien à faible délai. Le lecteur comprendra que la portée de l'invention ne se limite pas à cette combinaison, mais englobe toutes les combinaisons possibles entre au moins deux modes de réalisations.

En relation avec la **figure 3,** on présente maintenant un exemple de structure d'un dispositif de routage, selon un aspect de l'invention.

Le dispositif 100 de routage met en oeuvre le procédé de routage dont différents modes de réalisation viennent d'être décrits.

Un tel dispositif 100 peut être mis en oeuvre dans un routeur apte à router des paquets dans des réseaux de communication à commutation de paquets.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de routage selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :

- un module de réception 131, apte à recevoir un paquet PKT par une interface I1 du routeur,
- un module de lecture 132, apte à lire la valeur du champ de longévité du paquet reçu,
- un module d'obtention 133, apte à obtenir au moins une information parmi un groupe d'informations comprenant une information relative à des conditions de routage du paquet et une information relative à des paramètres du paquet,

EP 3 014 823 B1

- un module de détermination 134, apte à déterminer la valeur d'un pas de décrémentation en fonction d'au moins l'information obtenue,
- un module de décrémentation 135, apte à décrémenter la valeur du champ de longévité à l'aide du pas de décrémentation déterminé,
- un module de décision 136, apte à décider le routage du paquet en fonction de la valeur du champ de longévité décrémenté,
- un module de destruction 137, apte à détruire le paquet lorsque la valeur du champ de longévité décrémenté est inférieure ou égale à zéro,
- un module d'émission 138, apte à émettre le paquet par une interface I2 du routeur lorsque la valeur du champ de longévité décrémenté est supérieure à zéro.

Un tel dispositif 100 peut aussi comprendre :

- des interfaces d'entrée/sortie I-O, comprenant les interfaces I1 et I2, aptes à émettre des paquets sur le lien qui leur est associé, et à recevoir des paquets de ce lien, chaque lien connectant le routeur à un autre routeur,
- une table de routage FIB, apte à fournir les informations nécessaires à la détermination de l'interface de sortie pour un paquet reçu.

Les modules décrits en relation avec la figure 2 peuvent être des modules matériels ou logiciels.

Les exemples de réalisation de l'invention qui viennent d'être présentés ne sont que quelques uns des modes de réalisation envisageables. Ils montrent que l'invention permet de résoudre non seulement le problème des micro-boucles dans un réseau de communication, mais tout problème dû à la circulation excessivement longue d'un paquet dans le réseau avant son arrivée à destination ou avant sa destruction.

**Revendications**

1. **Procédé** de routage d'un paquet (PKT) dans un réseau de commutation de paquets en mode de routage non connecté, mis en œuvre par un routeur (A, B), comprenant les étapes suivantes :

    - réception (E1) du paquet ;
    - lecture (E2) d'un champ, dit champ de longévité du paquet, destiné à être décrémenté lors d'une traversée d'un routeur ;
    - décrémentation (E5) de la valeur du champ de longévité à l'aide d'un pas de valeur prédéterminée, dit pas de décrémentation ;
    - décision (E6) de routage du paquet en fonction de la valeur du champ de longévité décrémenté, le paquet étant détruit (E7) lorsque ladite valeur est inférieure ou égale à zéro ;

    dans lequel, préalablement à l'étape de décrémentation, on effectue les étapes suivantes :

    - obtention (E3) d'au moins une information parmi un groupe d'informations comprenant une information relative à des conditions de routage du paquet et une information relative à des paramètres du paquet ;
    - détermination (E4) de la valeur du pas de décrémentation en fonction d'au moins l'information obtenue,
    **caractérisé en ce que** l'information obtenue comprend une interface d'entrée du routeur pour le paquet et une interface de sortie du routeur pour le paquet,
    et **en ce que,** lorsque l'interface de sortie est identique à l'interface d'entrée, situation appelée un demi-tour, la valeur du pas est majorée.

2. **Procédé** de routage d'un paquet selon la revendication 1, **caractérisé en ce que** la valeur du pas majorée est déterminée comme étant au moins égale à la valeur maximale du champ de longévité, divisée par un nombre prédéterminé de demi-tours autorisés à un même paquet.

3. **Procédé** de routage d'un paquet selon l'une des revendications précédentes, **caractérisé en ce que** l'information obtenue comprend un coût associé à une interface de sortie du routeur,
   et **en ce que** la valeur du pas est déterminée comme étant proportionnelle au coût.

4. **Procédé** de routage d'un paquet selon la revendication 3, **caractérisé en ce que** le coût associé à l'interface de sortie est fonction d'au moins un paramètre compris dans le groupe comprenant :

9

• délai d'un lien associé à l'interface de sortie ;
• bande passante du lien ;
• gigue du lien ;
• perte de paquets du lien ;
• taille maximale d'un paquet permise sur le lien ;
• une valeur configurée par l'opérateur du réseau.

5. **Procédé** de routage d'un paquet selon l'une des revendications précédentes, **caractérisé en ce que** la valeur du pas déterminée est majorée si le lien associé à l'interface de sortie est un tunnel dont la destination n'est pas un routeur directement voisin du routeur.

6. **Procédé** de routage d'un paquet selon l'une des revendications précédentes, **caractérisé en ce que** l'information obtenue comprend une première distance entre un routeur précédent et un routeur de destination finale du paquet, et une deuxième distance entre le rouleur et ledit rouleur de destination finale, et **en ce que** la valeur du pas déterminée est majorée si la première distance est inférieure à la deuxième distance.

7. **Procédé** de routage d'un paquet selon l'une des revendications précédentes, **caractérisé en ce que** l'information obtenue est une classe de service comprise dans au moins un champ du paquet.

8. **Procédé** de routage d'un paquet selon l'une des revendications précédentes, **caractérisé en ce que** l'information obtenue est un type de protocole utilisé par une des couches du paquet.

9. **Procédé** de routage d'un paquet selon l'une des revendications précédentes, **caractérisé en ce que** l'information obtenue est le champ de longévité du paquet reçu, et **en ce que** la valeur du pas est déterminée en fonction de la valeur du champ.

10. **Programme d'ordinateur, caractérisé en ce qu'**il comprend des instructions pour la mise en oeuvre des étapes du procédé de routage selon la revendication 1, lorsque ce procédé est exécuté par un processeur.

11. **Support d'enregistrement** lisible par un routeur (A, B) sur lequel est enregistré le programme selon la revendication 10.

**Patentansprüche**

1. Verfahren zum Routing eines Pakets (PKT) in einem Paketvermittlungsnetz im nicht verbundenen Routing-Modus, das von einem Router (A, B) durchgeführt wird, die folgenden Schritte umfassend:

   - Empfang (E1) des Pakets;
   - Lesen (E2) eines Feldes, Lebensdauerfeld des Pakets genannt, das dazu bestimmt ist, bei einem Durchlaufen eines Routers dekrementiert zu werden;
   - Dekrementierung (E5) des Wertes des Lebensdauerfeldes mithilfe eines Schrittes mit vorbestimmtem Wert, Dekrementierungsschritt genannt;
   - Entscheidung (E6) über das Routing des Pakets in Abhängigkeit vom Wert des dekrementierten Lebensdauerfeldes, wobei das Paket vernichtet wird (E7), wenn der Wert kleiner oder gleich null ist;

   wobei vor dem Schritt der Dekrementierung die folgenden Schritte durchgeführt werden:

   - Gewinnung (E3) wenigstens einer Information aus einer Gruppe von Informationen, die eine Information in Bezug auf Routing-Bedingungen des Pakets und eine Information in Bezug auf Parameter des Pakets umfasst;
   - Bestimmung (E4) des Wertes des Dekrementierungsschrittes in Abhängigkeit von wenigstens der gewonnenen Information,
   **dadurch gekennzeichnet, dass** die gewonnene Information eine Eingangsschnittstelle des Routers für das Paket und eine Ausgangsschnittstelle des Routers für das Paket umfasst,
   und dadurch, dass, wenn die Ausgangsschnittstelle mit der Eingangsschnittstelle identisch ist, wobei diese Situation Kehrtwendung genannt wird, der Wert des Schrittes erhöht wird.

2. Verfahren zum Routing eines Pakets nach Anspruch 1, **dadurch gekennzeichnet, dass** der erhöhte Wert des Schrittes als wenigstens gleich dem maximalen Wert des Lebensdauerfeldes, dividiert durch eine vorbestimmte Anzahl von Kehrtwendungen, die für ein und dasselbe Paket erlaubt sind, bestimmt wird.

3. Verfahren zum Routing eines Pakets nach einem der vorhergehenden Ansprüche, **dadurch gekennzeichnet, dass** die gewonnene Information Kosten umfasst, die einer Ausgangsschnittstelle des Routers zugeordnet sind, und dadurch, dass der Wert des Schrittes als proportional zu den Kosten bestimmt wird.

4. Verfahren zum Routing eines Pakets nach Anspruch 3, **dadurch gekennzeichnet, dass** die der Ausgangsschnittstelle zugeordneten Kosten von wenigstens einem Parameter abhängen, der in der Gruppe enthalten ist, welche umfasst:

   • Verzögerung einer Verbindung, die der Ausgangsschnittstelle zugeordnet ist;
   • Durchlassbereich der Verbindung;
   • Jitter der Verbindung;
   • Paketverlust der Verbindung;
   • maximale Größe eines Pakets, die auf der Verbindung erlaubt ist;
   • einen vom Betreiber des Netzes konfigurierten Wert.

5. Verfahren zum Routing eines Pakets nach einem der vorhergehenden Ansprüche, **dadurch gekennzeichnet, dass** der bestimmte Wert des Schrittes erhöht wird, falls die der Ausgangsschnittstelle zugeordnete Verbindung ein Tunnel ist, dessen Ziel nicht ein Router ist, der dem Router unmittelbar benachbart ist.

6. Verfahren zum Routing eines Pakets nach einem der vorhergehenden Ansprüche, **dadurch gekennzeichnet, dass** die gewonnene Information eine erste Entfernung zwischen einem vorhergehenden Router und einem endgültigen Ziel-Router des Pakets und eine zweite Entfernung zwischen dem Router und dem endgültigen Ziel-Router umfasst, und dadurch, dass der bestimmte Wert des Schrittes erhöht wird, falls die erste Entfernung kleiner als die zweite Entfernung ist.

7. Verfahren zum Routing eines Pakets nach einem der vorhergehenden Ansprüche, **dadurch gekennzeichnet, dass** die gewonnene Information eine Dienstklasse ist, die in wenigstens einem Feld des Pakets enthalten ist.

8. Verfahren zum Routing eines Pakets nach einem der vorhergehenden Ansprüche, **dadurch gekennzeichnet, dass** die gewonnene Information ein Protokolltyp ist, der von einer der Schichten des Pakets verwendet wird.

9. Verfahren zum Routing eines Pakets nach einem der vorhergehenden Ansprüche, **dadurch gekennzeichnet, dass** die gewonnene Information das Lebensdauerfeld des empfangenen Pakets ist, und dadurch, dass der Wert des Schrittes in Abhängigkeit vom Wert des Feldes bestimmt wird.

10. Computerprogramm, **dadurch gekennzeichnet, dass** es Anweisungen zur Durchführung der Schritte des Verfahrens zum Routing nach Anspruch 1, wenn dieses Verfahren von einem Prozessor ausgeführt wird, umfasst.

11. Aufzeichnungsmedium, das von einem Router (A, B) lesbar ist und auf dem das Programm nach Anspruch 10 aufgezeichnet ist.

**Claims**

1. A method for routing a packet (PKT) within a packet switching network in non-connected routing mode, implemented by a router (A, B), comprising the following steps:

   - receiving (E1) the packet;
   - reading (E2) a field, called lifetime field of the packet, intended to be decremented when passing through a router;
   - decrementing (E5) the value of the lifetime field by a pitch of predetermined value, called decrementation pitch;
   - decision (E6) on routing of the packet depending on the value of the decremented lifetime field, the packet being destroyed (E7) when said value is less than or equal to zero;

   the method furthermore comprising, prior to the decrementation step, the following steps:

- obtaining (E3) at least one piece of information from amongst a group of pieces of information comprising information relating to conditions for routing the packet and information relating to parameters of the packet;
- determining (E4) the value of the decrementation pitch as a function at least of the information obtained, **characterized in that** the information obtained comprises an input interface of the router for the packet and an output interface of the router for the packet,
and **in that**, when the output interface is identical to the input interface, a situation referred to as an about-turn, the value of the pitch is augmented.

2. The method for routing a packet as claimed in claim 1, **characterized in that** the value of the augmented pitch is determined as being equal to at least the maximum value of the lifetime field, divided by a predetermined number of about-turn permitted for the same packet.

3. The method for routing a packet as claimed in one of the previous claims, **characterized in that** the information obtained comprises a cost associated with an output interface of the router,
and **in that** the value of the pitch is determined as being proportional to the cost.

4. The method for routing a packet as claimed in claim 3, **characterized in that** the cost associated with the output interface is a function at least of one parameter included in the group comprising:

   - delay of link associated with the output interface;
   - bandwidth of the link;
   - jitter of the link;
   - loss of packets from the link;
   - maximum size of a packet permitted on the link;
   - a value configured by the operator of the network.

5. The method for routing a packet as claimed in one of the previous claims, **characterized in that** the value of the pitch determined is augmented if the link associated with the output interface is a tunnel whose destination is not a router directly neighboring the router.

6. The method for routing a packet as claimed in one of the previous claims, **characterized in that** the information obtained comprises a first distance between a preceding router and a final destination router for the packet, and a second distance between the router and said final destination router, and **in that** the value of the pitch determined is augmented if the first distance is less than the second distance.

7. The method for routing a packet as claimed in one of the previous claims, **characterized in that** the information obtained is a service class included within at least one field of the packet.

8. The method for routing a packet as claimed in one of the previous claims, **characterized in that** the information obtained is a type of protocol used by one of the layers of the packet.

9. The method for routing a packet as claimed in one of the previous claims, **characterized in that** the information obtained is the lifetime field of the received packet, and **in that** the value of the pitch is determined as a function of the value of the field.

10. A computer program, **characterized in that** it comprises instructions for implementation of steps of the routing method as per claim 1, when executed by a processor.

11. Storing medium which can be read by a router (A, B) on which the program of claim 10 is stored.

Fig 1

Fig 3

Fig 2

E1 — rec pkt

E2 — get ttl

E3 — get info

E4 — det P

E5 — ttl - P

E6 — ttl ≤ S ?

E7 — dlt pkt

E8 — det nxt

E9 — snd pkt

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6501756 B

**Littérature non-brevet citée dans la description**

- *Internet-Draft de l'IETF,* 25 Mai 2013, draft-ietf-rt-gwg-ordered-fib-12